# EUROPEAN PATENT APPLICATION

(11) **EP 4 546 908 A1**
(43) Date of publication of application: **30.04.2025**
(21) Application number: 22947325.1
(22) Date of filing: 23.06.2022
(51) Int. Cl.: H04W 72/04, H04L 5/00

(54) **TCI STATE INDICATION METHOD, APPARATUS, DEVICE, AND MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/100811
(87) International publication number: WO 2023/245554

(57) **Abstract**

A TCI state indication method, an apparatus, a device, and a medium, The method is executed by a terminal (1600), and the method comprises: receiving first indication information (220), the first indication information being used for indicating a first TCI state, the first TCI state comprising N TCI states, the TCI states comprising a joint TCI state and/or an uplink TCI state, and N being an integer greater than 1, and receiving second indication information (240), the second indication information being used for indicating a second TCI state used during transmission of a first physical uplink control channel (PUCCH), the second TCI state comprising M TCI states, the M TCI states being a subset of the N TCI states, and M being a positive integer not greater than N. The method improves transmission flexibility of a PUCCH by providing additional indication information for the PUCCH channel.

## Description

### TECHNICAL FIELD

The disclosure relates to the field of communication technology, and in particular to a method, and an apparatus for indicating a transmission configuration indication (TCI) state, and a device, and a medium.

### BACKGROUND

In the field of communication technology, the use of a unified transmission configuration indication (TCI) state has been introduced to reduce signaling overhead. For example, when a base station indicates a unified TCI state for downlink, the unified TCI state may be suitable for a physical downlink shared channel (PDSCH) and a physical downlink control channel (PDCCH) of a terminal, and some downlink reference signals. When the base station indicates a unified TCI state for uplink, the unified TCI state may be suitable for a physical uplink shared channel (PUSCH) and a physical uplink control channel (PUCCH) of the terminal, and some uplink reference signals.

In the related art, the unified TCI state may be indicated separately for uplink and downlink, or may be indicated jointly for uplink and downlink. When the base station indicates a TCI state for downlink, the TCI state may be suitable for the PDSCH and the PDCCH of the terminal, and some channel status information reference signals (CSI-RSs). When the base station indicates a TCI state for uplink, the TCI state may be suitable for the PUSCH and the PUCCH of the terminal, and some sounding reference signals (SRSs). When the base station indicates a joint TCI state, the joint TCI state may be simultaneously suitable for both uplink and downlink channels/reference signals.

However, the related art are only suitable for the case of a single transmission reception point (S-TRP).

### SUMMARY

Embodiments of the disclosure provide a method, and an apparatus for indicating a transmission configuration indication (TCI) state, and a device, and a medium, which may flexibly indicate the TCI state used by a physical uplink control channel (PUCCH) during multi transmission reception point (M-TRP) transmission and may realize a dynamic switch between the M-TRP transmission and the single transmission reception point (S-TRP) transmission for the PUCCH. The technical solutions are as follows.

According to an aspect of the disclosure, a method for indicating a TCI state, performed by a terminal, is provided. The method includes: receiving first indication information, in which the first indication information indicates a first TCI state, the first TCI state includes N TCI states, the TCI states include a joint TCI state and/or an uplink TCI state, and N is an integer greater than 1; and receiving second indication information, in which the second indication information indicates a second TCI state used by first PUCCH transmission, and the second TCI state includes M TCI states; in which the M TCI states are a subset of the N TCI states, and M is a positive integer not greater than N.

According to an aspect of the disclosure, a method for indicating a TCI state, performed by an access network device, is provided. The method includes: sending first indication information, in which the first indication information indicates a first TCI state, the first TCI state includes N TCI states, the TCI states include a joint TCI state and/or an uplink TCI state, and N is an integer greater than 1; and sending second indication information, in which the second indication information indicates a second TCI state used by first PUCCH transmission, and the second TCI state includes M TCI states; in which the M TCI states are a subset of the N TCI states, and M is a positive integer not greater than N.

According to an aspect of the disclosure, an apparatus for indicating a TCI state is provided. The apparatus includes: a first receiving module, configured to receive first indication information, in which the first indication information indicates a first TCI state, the first TCI state includes N TCI states, the TCI states include a joint TCI state and/or an uplink TCI state, and N is an integer greater than 1; and a second receiving module, configured to receive second indication information, in which the second indication information indicates a second TCI state used by first PUCCH transmission, and the second TCI state includes M TCI states; in which the M TCI states are a subset of the N TCI states, and M is a positive integer not greater than N.

According to an aspect of the disclosure, an apparatus for indicating a TCI state is provided. The apparatus includes: a first sending module, configured to send first indication information, in which the first indication information indicates a first TCI state, the first TCI state includes N TCI states, the TCI states include a joint TCI state and/or an uplink TCI state, and N is an integer greater than 1; and a second sending module, configured to send second indication information, in which the second indication information indicates a second TCI state used by first PUCCH transmission, and the second TCI state includes M TCI states; in which the M TCI states are a subset of the N TCI states, and M is a positive integer not greater than N.

According to another aspect of the disclosure, a terminal is provided. The terminal includes: a processor; a transceiver coupled to the processor; and a memory configured to store instructions executable by the processor; in which the processor is configured to load and execute executable instructions to enable the terminal to implement the method according to any one of aspects described above.

According to another aspect of the disclosure, an access network device is provided. The access network device includes: a processor; a transceiver coupled to the processor; and a memory configured to store instructions executable by the processor; in which the processor is configured to load and execute executable instructions to enable the access network device to implement the method according to any one of aspects described above.

According to another aspect of the disclosure, a chip is provided. A communication device installed with the chip is configured to implement the method according to any one of aspects described above.

According to another aspect of the disclosure, a computer-readable storage medium is provided. The computer-readable storage medium stores at least one instruction, at least one segment of a program, a code set or an instruction set, in which the at least one instruction, the at least one segment of a program, the code set or the instruction set is loaded and executed by a processor to enable the communication device to implement the method according to any one of aspects described above.

The technical solution provided by the embodiments of the disclosure brings beneficial effects, which include at least the following.

The solution may realize the dynamic switch between M-TRP transmission and S-TRP transmission for the PUCCH by using the second indication information during the M-TRP transmission, thus improving the flexibility of the PUCCH transmission.

### BRIEF DESCRIPTION OF THE DRAWINGS

**In** order to more clearly illustrate the technical solutions of the embodiments of the disclosure, the drawings required for use in the description of the embodiments of the disclosure may be briefly introduced below. Obviously, the drawings in the following description are only some embodiments of the disclosure. For those skilled in the art, other drawings may be obtained based on these drawings without creative works.
FIG. 1 is a schematic diagram illustrating a communication system according to an example embodiment.
FIG. 2 is a flow chart illustrating a method for indicating a transmission configuration indication (TCI) state according to an example embodiment.
FIG. 3 is a flow chart illustrating a method for indicating a TCI state according to an example embodiment.
FIG. 4 is a block diagram illustrating an apparatus for indicating a TCI state according to an example embodiment.
FIG. 5 is a block diagram illustrating an apparatus for indicating a TCI state according to an example embodiment.
FIG. 6 is a structural block diagram illustrating a terminal according to an example embodiment.
FIG. 7 is a structural block diagram illustrating a network device according to an example embodiment.

### DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the disclosure. Rather, they are merely examples of devices and methods consistent with aspects of the embodiments of the application as recited in the appended claims.

The network architecture and the service scenarios described in the embodiments of the disclosure are intended to more clearly illustrate the technical solutions of the embodiments of the disclosure and do not constitute a limitation of the technical solutions provided in the embodiments of the disclosure. As those skilled in the art would understand, with the evolution of the network architecture and the emergence of new service scenarios, the technical solutions provided in the embodiments of the disclosure are equally applicable to similar technical problems.

The following is an introduction to several terms provided in the embodiments of the disclosure.

TCI state. The TCI state is configured to inform the terminal, when receiving PDCCH/PDSCH and/or its demodulation reference signal (DMRS), to use the same quasi co-location (QCL) information or spatial Rx parameter as that of which reference signal (such as a synchronization signal block (SSB) or a channel state information reference signal (CSI-RS)) is received from the base station. Alternatively, the TCI state is configured to inform the terminal, when sending PUCCH/PUSCH and/or its DMRS, to use the same QCL information, spatial relation information, or spatial filter as that of which reference signal (such as SRS or CSI-RS) is sent.

Unified TCI state. When the base station indicates a unified TCI state for downlink, the unified TCI state may be suitable for a PDSCH and a PDCCH of a terminal, and some downlink reference signals. When the base station indicates a unified TCI state for uplink, the unified TCI state may be suitable for a PUSCH and a PUCCH of the terminal, and some uplink reference signals. At present, the unified TCI state may be indicated separately using a separate uplink TCI state and a separate downlink TCI state, or be indicated jointly using an uplink and downlink joint TCI state. The separate uplink TCI state is suitable for the uplink channel and/or signal. The separated downlink TCI state is suitable for the downlink channel and/or signal. The joint TCI state is simultaneously suitable for both the uplink channel and/or signal, and the downlink channel and/or signal.

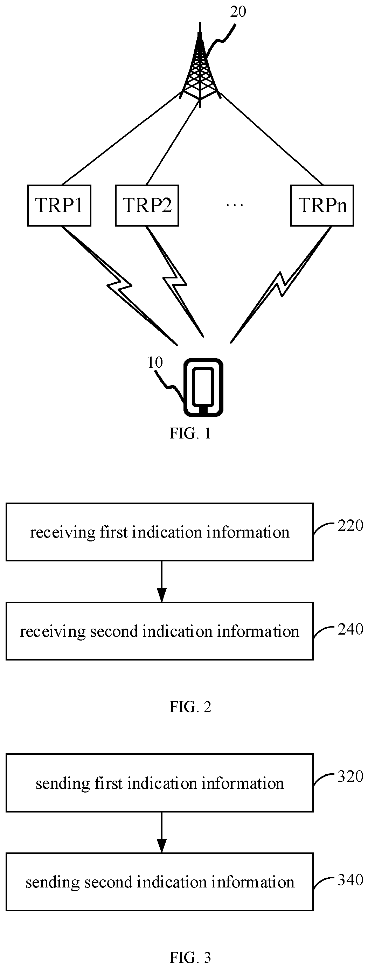

FIG. 1 is a schematic diagram illustrating a communication system according to an embodiment of the disclosure. The communication system may include: a terminal 10 and an access network device 20.

There are typically a plurality of terminals 10, and one or more terminals 10 may be distributed within each cell managed by the access network device 20. The terminal 10 may include various types of devices with wireless communication functions, such as handheld devices, in-vehicle devices, wearable devices, computing devices, or other processing devices connected to a wireless modem, and various forms of user equipment (UE), mobile stations (MS), and the like. For convenience of description, the above mentioned devices are collectively referred to as the terminal in the embodiments of the disclosure.

The access network device 20 is a device deployed in an access network to provide a wireless communication function for the terminal 10. The access network device 20 may include various forms of base stations, such as macro base stations, micro base stations, relay stations, or access points. In systems that use different wireless access technologies, the name of the device with the access network device function may vary. For example, in a 5G NR system, the device is called a gNodeB or gNB. With the evolution of communication technologies, the term "access network device" may vary. For convenience of description, the above mentioned devices that provide wireless communication functions for the terminal 10 are collectively referred to as the access network device in the embodiments of the disclosure. The access network device 20 and the terminal 10 may establish a connection via the radio interface, allowing communication over this connection, including interaction of signaling and data. There may be a plurality of access network devices 20, and two adjacent access network devices 20 may also communicate with each other by wired or wireless means. The terminal 10 may be able to perform switching between different access network devices 20, i.e., establish connections with different access network devices 20.

Optionally, the access network device 20 is equipped with at least two transmission reception points (TRPs); or each of at least two access network devices 20 is equipped with at least one TRP, i.e., at least two access network devices 20 are equipped with at least two TRPs. That is, the at least two TRPs may be from the same cell or different cells. The terminal 10 establishes a communication connection between the at least two TRPs through the downlink TCI state and/or the uplink TCI state. Optionally, different TRPs use different downlink TCI states and/or uplink TCI states. For example, the terminal 10 determines a downlink TCI state to be used for receiving the PDCCH based on the joint TCI state or the downlink TCI state. The terminal 10 determines an uplink TCI state to be used for sending the PUSCH based on the joint TCI state or the uplink TCI state.

The "5G NR system" in the embodiments of the disclosure may also be referred to as a 5G system or a NR system, the meaning of which may be understood by those skilled in the art. The technical solutions described in the embodiments of the disclosure may be suitable for a 5G NR system or a subsequent evolution system of the 5G NR system.

**In** a new radio (NR) technology, particularly when the communication frequency band is in frequency range 2, beam-based transmission and reception is required to ensure a coverage due to the rapid attenuation of the high-frequency channel.

FIG. 2 is a flow chart illustrating a method for indicating a TCI state according to an embodiment. The method may be applied to a terminal in the communication system shown in FIG. 1. The method includes the following steps 220 to 240.

At step 220, first indication information is received.

The terminal receives the first indication information sent by the access network device.

The first indication information indicates a first TCI state, the first TCI state includes N TCI states, the TCI states include a joint TCI state and/or an uplink TCI state, and N is an integer greater than 1. That is, the first indication information indicates information about a plurality of joint/uplink TCI states. The first indication information indicates a unified TCI state of the uplink channel and/or signal. Each TCI state in the N TCI states may be a joint TCI state or an uplink TCI state.

In some embodiments, the first indication information is carried in a first medium access control (MAC) control element (CE) and the first MAC CE indicates the N TCI states. The N TCI states correspond to one codepoint in a TCI field of downlink control information (DCI). That is, the first indication information is carried only in the first MAC CE; since the N TCI states indicated in the first MAC CE correspond to only one codepoint in the TCI field of the DCI, the base station is not required to additionally send the DCI to the terminal to indicate the codepoint, thus saving the signaling overhead.

In some embodiments, the first indication information is carried in a second MAC CE and first DCI, the second MAC CE indicates the N TCI states corresponding to each of at least two codepoints, and the first DCI indicates one of the at least two codepoints. That is, the second MAC CE and the first DCI simultaneously indicate the first indication information, where the second MAC CE indicates the N TCI states corresponding to each of the at least two codepoints in the TCI field of the first DCI, and the first DCI indicates the codepoints. The N TCI states corresponding to the codepoint may then be obtained by querying the second MAC CE. In this case, the second MAC CE may indicate a plurality of sets of codepoint configurations, each set of codepoint configurations corresponding to the N TCI states. It should be noted that in the N TCI states corresponding to each codepoint, the value of N corresponding to each codepoint may be the same or different.

In some embodiments, the first indication information also includes identification information corresponding to each TCI state, and the identification information is a control resource set (CORESET) pool index or a CORESET group identity (ID) or a search space (SS) set group ID or a PDCCH group ID or a PUCCH group ID or a PUCCH resource index; or, the first indication information includes the N TCI states, and each TCI state in the N TCI states has a default mapping relationship with the identification information.

In one case, when each TCI state in the N TCI states has the default mapping relationship with the identification information, the first indication information does not need to additionally indicate a correspondence between the TCI state and the identification information. In another case, when the TCI state does not have the default mapping relationship with the identification information, the first indication information further includes the correspondence between each TCI state and the identification information.

At step 240, second indication information is received.

The terminal receives the second indication information sent by the access network device.

The second indication information indicates a second TCI state used by first PUCCH transmission, and the second TCI state includes M TCI states; in which the M TCI states are a subset of the N TCI states, and M is a positive integer not greater than N. That is, the M TCI states are the same as the N TCI states, or, the M TCI states are a proper subset of the N TCI states, i.e., the M TCI states are all or a portion of the N TCI states. Each TCI state in the M TCI states may be a joint TCI state or an uplink TCI state.

In some embodiments, the first PUCCH is configured with at least one of: a transmission mode based on frequency division multiplexing (FDM); a transmission mode based on time division multiplexing (TDM); DMRS ports for at least two code division multiplexing (CDM) groups; or a transmission mode based on single-frequency network (SFN).

Optionally, the transmission mode based on FDM refers to the fact that frequency domain resources at n PUCCH occasions for PUCCH transmission are different, and the TCI states of the n PUCCH occasions are different. The transmission mode based on FDM include: an FDM scheme A or an FDM mode B. The FDM scheme A refers to the fact that the terminal is indicated with a plurality of TCI states, the terminal transmits the PUCCH at one PUCCH occasion using different TCI states on non-overlapping frequency domain resources. The FDM mode B refers to the fact that the terminal is indicated with the plurality of TCI states, the terminal transmits the PUCCH respectively at a plurality of PUCCH occasions using different TCI states on non-overlapping frequency domain resources. In an exemplary embodiment of the FDM mode B, both the number of the TCI states and the number of the PUCCH occasions are 2.

Optionally, the transmission mode based on TDM refers to the fact that time domain resources of n PUCCH occasions for PUCCH transmission are different, and the TCI states of the n PUCCH occasions are different. The transmission mode based on TDM includes either repeating the transmission within one slot or repeating the transmission between slots.

Optionally, the DMRS ports for PUCCH transmission correspond to at least two CDM groups, and the at least two CDM groups correspond to different TCI states.

Optionally, the transmission mode based on SFN includes an SFN scheme A or an SFN scheme B. In the SFN mode, the TCI state for the first PUCCH transmission includes at least two TCI states, each of which includes a joint TCI state or an uplink TCI state. In the case that reception of the first PUCCH is configured with the transmission mode based on SFN, the SFN may also dynamically switch to S-TRP transmission, i.e., when the number of TCI states is greater than 1, the transmission based on SFN is used, otherwise the transmission is dynamically switched to S-TRP transmission. Optionally, the time domain resources and the frequency domain resources for PUCCH transmission are the same, and the DMRS ports for PUCCH transmission are the same.

In the SFN scheme A, when the at least two TCI states are indicated, the terminal assumes that the DMRS ports for PUCCH transmission are in a QCL with reference signals corresponding to the at least two TCI states. In the SFN scheme B, when the at least two TCI states are indicated, the terminal assumes that the DMRS ports for PUCCH transmission are in a QCL with reference signals corresponding to at least two TCI states, except for QCL parameters of the second TCI state: {Doppler shift, Doppler spread}.

In some embodiments, the first PUCCH is configured with at least one of following configuration parameters: at least one spatial-relation-information (spatial-relation-info); at least one TCI state; at least one power control parameter set; at least one SRS resource set; or at least one pathloss reference signal. For example, the number of the configuration parameters is N, e.g., N is a positive integer. The present embodiment uses 2 configuration parameters as an example.

**In** some embodiments, in the case of M being equal to 1, i.e., in the transmission state of the S-TRP, the second indication information indicates one configuration parameter corresponding to the first PUCCH, it indicates that one TCI state among the N TCI states corresponding to the one configuration parameter is used by the first PUCCH transmission. For example, the second indication information indicates that the configuration parameter corresponding to the first PUCCH is the first one of the two SRS resource sets, it indicates that the first one of the 2 TCI states indicated in the first indication information is used by the first PUCCH transmission. For example, the second indication information indicates that the configuration parameter corresponding to the first PUCCH is the first one of the two power control parameter sets, it indicates that the first one of the 2 TCI states indicated in the first indication information is used by the first PUCCH transmission. For example, the second indication information indicates that the configuration parameter corresponding to the first PUCCH is the first one of the two pathloss reference signals, it indicates that the first one of the 2 TCI states indicated in the first indication information is used by the first PUCCH transmission. For example, the second indication information indicates that the configuration parameter corresponding to the first PUCCH is the first one of the two TCI states, it indicates that the first one of the 2 TCI states indicated in the first indication information is used by the first PUCCH transmission. For example, the second indication information indicates that the configuration parameter corresponding to the first PUCCH is the first spatial-relation-info of the two spatial-relation-info, it indicates that the first one of the 2 TCI states indicated in the first indication information is used by the first PUCCH transmission. It should be noted that the i^{th} herein refers to the i^{th} parameter among the same type of parameters.

In some embodiments, in the case of M being greater than 1, i.e., in the transmission state of the M-TRP, the second indication information indicates at least two configuration parameters corresponding to the first PUCCH, it indicates that TCI states corresponding to the at least two configuration parameters among the N TCI states are used by the first PUCCH transmission. In a typical case, the number of the configuration parameters is configured as 2.

In some embodiments, in the case that the first PUCCH is configured with the transmission mode based on FDM and M is greater than 1, different frequency domain resources of the first PUCCH correspond to different TCI states. In the case that the first PUCCH is configured with the transmission mode based on TDM and M is greater than 1, different time domain resources of the first PUCCH correspond to different TCI states. In the case that the first PUCCH is configured with the DMRS ports for at least two CDM groups and M is greater than 1, different DMRS ports for different CDM groups of the first PUCCH correspond to different TCI states. In the case that first PUCCH is configured with the transmission mode based on SFN and M is greater than 1, the DMRS ports for the first PUCCH correspond to M TCI states.

That is, in the transmission state of the M-TRP, different time domain resources/frequency domain resources/DMRS ports for CDM groups correspond to different TCI states. Alternatively, in the SFN mode, the DMRS ports corresponds to a plurality of TCI states under the same time domain resources/frequency domain resources.

In some embodiments, the second indication information is carried in a third MAC CE, and the third MAC CE is the same as or different from an MAC CE where the first indication information is located. The MAC CE where the first indication information is located includes a first MAC CE or a second MAC CE. In the case that the first indication information is carried in the first MAC CE, the third MAC CE is the same as or different from the first MAC CE. Alternatively, in the case that the first indication information is carried in the second MAC CE and the first DCI, the third MAC CE is the same as or different from the second MAC CE.

In some embodiments, in the case that the third MAC CE is the same as the MAC CE carrying the first indication information, the third MAC CE simultaneously indicates the N TCI states (i.e., the contents of the first indication information), and the M TCI states corresponding to the first PUCCH (i.e., the contents of the second indication information). Further, the third MAC CE further indicates the correspondence between the identification information and the N TCI states (an optional content of the first indication information) and/or indicates the correspondence between the identification information and the M TCI states (an optional content of the second indication information). The identification information is a CORESET pool index or a CORESET group ID or an SS set group ID or a PDCCH group ID or a PUCCH group ID or a PUCCH resource index. For example, the third MAC CE is a unified TCI state activation/deactivation MAC CE, which simultaneously indicates the first indication information and the second indication information.

In the case that the third MAC CE is the same as the MAC CE carrying the first indication information, the information carried in the same MAC CE includes the contents included in the first indication information and the contents included in the second indication information. That is, the third MAC CE includes indicating information related to the N TCI states and indicating information related to the M TCI states.

The information related to the N TCI states includes at least one of the N TCI states, or identification information corresponding to each TCI state. The information related to the M TCI states includes at least one of the M TCI states, the identification information or the TCI states corresponding to each SS set or each CORESET, the identification information corresponding to the PUCCH, or the correspondence between the identification information and the M TCI states. The information included in the third MAC CE is any combination of the information related to the N TCI states and the information related to the M TCI states.

In some embodiments, the N TCI states has a corresponding relationship with at least one configuration parameter. In the case that the third MAC CE indicates an i^{th} configuration parameter in the at least one configuration parameter, it is determined that the M TCI states corresponding to the first PUCCH include a TCI state corresponding to the i^{th} configuration parameter; or, in the case that there are at least two configuration parameters and the third MAC CE indicates the at least two configuration parameters, it is determined that the M TCI states corresponding to the first PUCCH include TCI states corresponding to the at least two configuration parameters; in which i is a positive integer not greater than N, and the at least one configuration parameter is at least one of: at least one spatial relationship, at least one TCI state, at least one power control parameter set, at least one SRS resource set or at least one pathloss reference signal.

For example, both the number of configuration parameters and the number of TCI states are two. In the case that the third MAC CE indicates the first one of the two configuration parameters, it is indicated that the first TCI state is used. In the case that the third MAC CE indicates the second one of the two configuration parameters, it is indicated that the second TCI state is used. In the case that the MAC CE indicates two configuration parameters, it is indicated that the two TCI states are used. It follows the same principle when the number of configuration parameters is larger.

For example, the configuration parameters are two SRS resource sets, in which the first SRS resource set corresponds to the first TCI state and the second SRS resource set corresponds to the second TCI state. In the case that the third MAC CE indicates the first SRS resource set, it is indicated that the first TCI state is used. In the case that the third MAC CE indicates the second SRS resource set, it is indicated that the second TCI state is used. In the case that the third MAC CE indicates both the first SRS resource set and the second SRS resource set, it is indicated that both the first TCI state and the second TCI state are used. It follows the same principle when the number of configuration parameters is larger.

In some embodiments, the second indication information is carried in second DCI, and the second DCI is the same as or different from DCI where the first indication information is located. That is, in the case that the first indication information is carried in the second MAC CE and the first DCI, the second DCI and the first DCI may be the same or different.

For example, the first indication information is carried in DCI in format 1_1 or 1_2 without downlink assignment, and the second DCI is the DCI in format 1_1 or 1_2 without downlink assignment; or, the first indication information is carried in DCI in format 1_1 or 1_2 with downlink assignment, and the second DCI is DCI in format 1_1 or 1_2 without downlink assignment; or, the first indication information is carried in DCI in format 1_1 or 1_2 without downlink assignment, and the second DCI is DCI in format 1_1 or 1_2 with downlink assignment; or, the first indication information is carried in DCI in format 1_1 or 1_2 with downlink assignment, and the second DCI is the DCI in format 1_1 or 1_2 with downlink assignment; or, the first indication information is carried in DCI in format 1_1 or 1_2 with or without downstream assignment, and the second DCI is DCI in a format other than format 1_1 and format 1_2.

For example, in the case that the DCI where the second indication information is located is the DCI without downlink assignment, a field used by the second indication information in the DCI in format 1_1 or 1_2 without downlink assignment is at least one of:
- a frequency domain resource assignment (FDRA);
- a time domain resource assignment (TDRA);
- a virtual resource block to physical resource block mapping (VRB-to-PRB mapping);
- a PRB bundling size indicator;
- a rate matching indicator;
- a non-zero power channel state information reference signal (CSI-RS) triggering;
- a hybrid automatic repeat request (HARQ) process number;
- a downlink assignment index;
- a transmit power control (TPC) command for scheduled PUCCH;
- a second TPC command for scheduled PUCCH;
- a PUCCH resource indicator;
- a PDSCH-to-HARQ feedback timing indicator;
- a one-shot HARQ-acknowledgment (ACK) request;
- an enhanced Type 3 codebook indicator;
- a PDSCH group index;
- a new feedback indicator;
- a number of requested PDSCH groups;
- an HARQ-ACK retransmission indicator;
- an antenna port;
- an SRS request;
- an SRS offset indicator;
- code block group (CBG) transmission information;
- CBG flushing out information (CBGFI);
- DMRS sequence initialization;
- a priority indicator;
- a channel access- cyclic prefix (CP);
- a minimum applicable scheduling offset indicator;
- a secondary cell (SCell) dormancy indication;
- a PDCCH monitoring adaptation indication;
- a PUCCH cell indicator;
- a redundancy version;
- a TCI state indication field;
- an enhanced TCI state indication field; or
- a newly added TCI state indication field: a second TCI state indication field.

In another embodiment, in the case that the DCI where the second indication information is located is the DCI with downlink assignment, a field used by the second indication information in the DCI in format 1_1 or 1_2 with downlink assignment is at least one of:
- a FDRA;
- a TDRA;
- a VRB-to-PRB mapping;
- a PRB bundling size indicator;
- a rate matching indicator;
- a non-zero power CSI-RS triggering;
- a HARQ process number;
- a downlink assignment index;
- a TPC command for scheduled PUCCH;
- a second TPC command for scheduled PUCCH;
- a PUCCH resource indicator;
- a PDSCH-to-HARQ feedback timing indicator;
- a one-shot HARQ-ACK request;
- an enhanced Type 3 codebook indicator;
- a PDSCH group index;
- a new feedback indicator;
- a number of requested PDSCH groups;
- an HARQ-ACK retransmission indicator;
- an antenna port;
- an SRS request;
- an SRS offset indicator;
- CBG transmission information;
- CBGFI;
- DMRS sequence initialization;
- a priority indicator;
- a channel access-CP;
- a minimum applicable scheduling offset indicator;
- a SCell dormancy indication;
- a PDCCH monitoring adaptation indication;
- a PUCCH cell indicator;
- a redundancy version;
- a TCI state indication field;
- an enhanced TCI state indication field; or
- a newly added TCI state indication field: a second TCI state indication field.

In some embodiments, the second indication information is in the DCI in format 1_1 or 1_2 with downlink assignment, and at least a portion of bits or at least a portion of codepoints of an existing information field are used by the second indication information.

For example, the existing information field used by the second indication information occupies a maximum of 3 bits, in which the existing information occupies the first 2 bits of the 3 bits and the second indication information occupies the last 1 bit of the 3 bits.

For example, there are a maximum of 6 bits available in a TDRA field, and in the case that the TDRA is required to indicate a time domain resource assignment and the number of bits required for the time domain resource assignment is 4 (less than 6 bits), the remaining 2 bits in the TDRA field, in addition to the 4 bits occupied by the time domain resource assignment, may indicate the second indication information.

In some embodiments, the second indication information is in the DCI in format 1_1 or 1_2 with downlink assignment, and an existing information field simultaneously indicates a combination of both the existing information and the second indication information.

For example, the communication protocol predefines a table that includes at least one row of existing information and second indication information. As shown in Table 1, each row of the existing information and the second indication information forms a combination of the existing information and the second indication information, and each row is indicated by a different codepoint. For example, the codepoint 00 indicates a first row in the table, i.e., a combination of existing information 1 and second indication information 1. The bits in the existing information field indicate one codepoint in the table. By querying the corresponding row in the table through the codepoint, a combination of the existing information and the second indication information may be determined.

**Table 1**

| codepoint | existing information | second indication information |
|---|---|---|
| 00 | existing information 1 | second indication information 1 |
| 01 | existing information 2 | second indication information 2 |
| 10 | existing information 3 | second indication information 3 |
| 11 | existing information 4 | second indication information 4 |

In some embodiments, the second indication information is in the DCI in format 1_1 or 1_2 with downlink assignment, and both a newly added information field and an existing information field indicate the second indication information, or indicate the existing information and the second indication information.

For example, the existing information field is the second TPC command for scheduled PUCCH field, and there are a maximum of 2 bits available in the existing information field. In the case that the DCI where the second indication information is located is the DCI without downlink assignment, since the existing information field "the second TPC command for scheduled PUCCH field" is not utilized, the existing information field may be used to indicate the M TCI states. For example, when N=2, when the second TPC command for scheduled PUCCH field indicates "00", the first TCI state of the N TCI states is used, when the second TPC command for scheduled PUCCH field indicates "01", the second TCI state of the N TCI states is used, when the second TPC command for scheduled PUCCH field indicates "10", the two TCI states of the N TCI states are used. In the case that the DCI where the second indication information is located is the DCI with downlink assignment, since the existing information field "the second TPC command for scheduled PUCCH field" may need to be used, a 1-bit newly added information field is used to indicate whether the existing information field is present or not. In the case that the newly added information field indicates the existing information field is present, it is indicated that the transmission state is M-TRP and reception of the first PUCCH uses the N TCI states. In the case that the newly added information field indicates the existing information field is not present, it is indicated that the transmission state is S-TRP, and reception of the first PUCCH uses the M TCI states indicated by at least 1 in the 2 bits of the existing information field. For example, when the existing information field indicates "00", it is indicated that the first TCI state of the N TCI states is used, and when the existing information field indicates "01", the second TCI state of the N TCI states is used. It should be noted that, in order to unify the DCI without downlink assignment and the DCI with downlink assignment, in the case that the DCI where the second indication information is located is the DCI without downlink assignment, the above described method in the case that the DCI where the second indication information is located is the DCI with downlink assignment may also be used, that is, the 1-bit newly added information field is used to indicate whether or not the existing information field is present. Optionally, in the case that the second TPC command for scheduled PUCCH field is occupied, a third TPC command for scheduled PUCCH field may be added and 1 bit is used to indicate whether or not the new field (i.e., the third TPC command for scheduled PUCCH field) is present or not.

In some embodiments, the second indication information is in the DCI in format 1_1 or 1_2 without downlink assignment, and at least a portion of bits of an existing information field are used by the second indication information. That is, in the case that the field used by the second indication information does not need to indicate downlink assignment related information, all of the bits or a part of the bits in the field are used to indicate the second indication information.

For example, the existing information field occupies 3 bits, and when the existing information field does not need to indicate downlink assignment related information in the current downlink assignment, all 3 bits or at least one bit in the field may be used to indicate the second indication information.

For example, the existing information field includes at least one of:
- a FDRA;
- a TDRA;
- a VRB-to-PRB mapping;
- a PRB bundling size indicator;
- a rate matching indicator;
- a non-zero power CSI-RS triggering;
- a HARQ process number;
- a downlink assignment index;
- a TPC command for scheduled PUCCH;
- a second TPC command for scheduled PUCCH;
- a PUCCH resource indicator;
- a PDSCH-to-HARQ feedback timing indicator;
- a one-shot HARQ-ACK request;
- an enhanced Type 3 codebook indicator;
- a PDSCH group index;
- a new feedback indicator;
- a number of requested PDSCH groups;
- an HARQ-ACK retransmission indicator;
- an antenna port;
- an SRS request;
- an SRS offset indicator;
- CBG transmission information;
- CBGFI;
- DMRS sequence initialization;
- a priority indicator;
- a channel access-CP;
- a minimum applicable scheduling offset indicator;
- a SCell dormancy indication;
- a PDCCH monitoring adaptation indication;
- a PUCCH cell indicator;
- a redundancy version; or
- a TCI state indication field.

In some embodiments, in the case of the DCI without downlink allocation, the field configuration of the DCI is as follows: each bit of a redundancy version (RV) field is set to "1", each bit of a modulation and coding scheme (MCS)/modulation and coding strategy field is set to "1", and the new data indicator (NDI) is set to "0". In addition, either (a) each bit of FDRA type 0 is set to "0" or (b) each bit of FDRA type 1 is set to "1" or (c) each bit of a dynamic switch field is set to "0".

In another case, in the case that the second DCI is the DCI in the format other than the format 1_1 and the format 1_2, a type of an SS set associated with the second DCI is a UE specific SS set or a common SS set.

In some embodiments, other possible scenarios where the first indication information and the second indication information are located include (a) the first indication information is carried in the MAC CE and the second indication information is carried in the DCI and (b) the first indication information is carried in the DCI and the second indication information is carried in the MAC CE.

It should be noted that updating of the first indication information is independent from updating of the second indication information. That is, possible scenarios for updating the information include: (a) the first indication information remains unchanged and the second indication information changes, (b) the first indication information changes and the second indication information remains unchanged, and (c) both the first indication information and the second indication information change.

It should be noted that the second indication information may be sent for a plurality of times and the content indicated by the second indication information for each time is independent. For example, the second indication information indicates the transmission state of the M-TRP at the i^{th} time of sending, and indicates the transmission state of the S-TRP at the (i+1)^{th} time of sending, where i is a positive integer. This is not limited in the disclosure.

In some embodiments, the second indication information further indicates a third TCI state for at least one channel. The at least one channel includes at least one of: a PUSCH; a PDSCH; or a PDCCH. That is, the third TCI state is the same as the second TCI state; or, in the case that the second TCI state includes an uplink TCI state and the at least one channel is the PDCCH or the PDSCH, the third TCI state includes a downlink TCI state that corresponds to the uplink TCI state.

In some embodiments, the MAC CE or the DCI where the second indication information is located further indicates a third TCI state for at least one channel. The at least one channel includes at least one of: a PUSCH; a PDSCH; or a PDCCH.

Further, in the case that the at least one channel includes the PUSCH, the third TCI state is a subset of the first TCI state. That is, either the third TCI state is the same as the first TCI state or the third TCI state is a proper subset of the first TCI state.

Optionally, in the case that the at least one channel includes the PUSCH, the second indication information further indicates that the PUSCH is at least one of dynamic scheduled, configured grant type 1, or configured grant type 2.

Further, in the case that the at least one channel includes the PDCCH or the PDSCH, the first TCI state includes N joint TCI states and/or downlink TCI states, and the third TCI state is a subset of the N joint TCI states and/or downlink TCI states. That is, either (a) the third TCI state is the same as the first TCI state, (b) the third TCI state is a proper subset of the first TCI state, or (c) the third TCI state is a proper subset of the N joint TCI states and/or downlink TCI states.

Optionally, in the case that the at least one channel includes the PDCCH or the PDSCH, the second indication information further indicates an SS set ID or a CORESET ID or a CORESET group ID or a PDCCH group ID or a CORESET pool index or a PDSCH group ID, corresponding to the PDCCH or the PDSCH.

In some embodiments, the second indication information includes at least one bandwidth part (BWP) ID and/or at least one component carrier (CC) ID.

Further, in the case that the CC ID is a CC ID in a CC list, the second TCI state is suitable for all BWPs on all CCs in the CC list; i.e., the BWP ID may be ignored. The CC list is a list configured by the base station.

In some embodiments, the at least one BWP ID and/or at least one CC ID corresponding to the second TCI state indicated by the second indication information is the same as BWP ID(s) and/or CC ID(s) corresponding to the N TCI states indicated by the first indication information.

In summary, in the case of receiving the first indication information for indicating a plurality of sets of TCI states, the terminal then receives the second indication information for indicating the TCI states used by the PUCCH transmission, thus realizing dynamic switching of the PUCCH channel between the transmission state of the M-TRP and the transmission state of the S-TRP, and improving the flexibility of the PUCCH transmission based on the unified TCI state.

FIG. 3 is a flow chart illustrating a method for indicating a TCI state according to an embodiment. The method may be applied to an access network device in the communication system shown in FIG. 1. The method includes the following steps 320 to 340.

At step 320, first indication information is sent.

The access network device sends the first indication information to the terminal.

The first indication information indicates a first TCI state, the first TCI state includes N TCI states, the TCI states include a joint TCI state and/or an uplink TCI state, and N is an integer greater than 1. That is, the first indication information indicates information about a plurality of joint/uplink TCI states. The first indication information indicates a unified TCI state of the uplink channel and/or signal. Each TCI state of the N TCI states may be a joint TCI state or an uplink TCI state.

In some embodiments, the first indication information is carried in a first MAC CE, and the first MAC CE indicates the N TCI states.

In some embodiments, the first indication information is carried in a second MAC CE and first DCI, the second MAC CE indicates the N TCI states corresponding to each of at least two codepoints, and the first DCI indicates one of the at least two codepoints.

In some embodiments, the first indication information also includes identification information corresponding to each TCI state, and the identification information is a CORESET pool index or a CORESET group ID or an SS set group ID or a PDCCH group ID or a PUCCH group ID or a PUCCH resource index; or, the first indication information includes the N TCI states, and each TCI state in the N TCI states has a default mapping relationship with the identification information.

The access network device sends the first indication information to the terminal, and the relevant introduction of the first indication information may be referred to the description at step 220 above, and will not be repeated herein.

At step 340, second indication information is sent.

The terminal receives the second indication information sent by the access network device.

The second indication information indicates a second TCI state used by first PUCCH transmission, and the second TCI state includes M TCI states; in which the M TCI states are a subset of the N TCI states, and M is a positive integer not greater than N. That is, either (a) the M TCI states are the same as the N TCI states or (b) the M TCI states are a proper subset of the N TCI states, i.e., the M TCI states are all or a portion of the N TCI states. Each TCI state in the M TCI states may be a joint TCI state or an uplink TCI state.

In some embodiments, the first PUCCH is configured with at least one of: a transmission mode based on FDM; a transmission mode based on TDM; DMRS ports for at least two CDM groups; or a transmission mode based on SFN.

Optionally, the transmission mode based on SFN includes an SFN scheme A or an SFN scheme B.

In some embodiments, the first PUCCH is configured with at least one of following configuration parameters: at least one spatial-relation-info; at least one TCI state (including an uplink TCI state or a joint TCI state); at least one power control parameter set; at least one SRS resource set; or at least one pathloss reference signal. In an embodiment, the number of the configuration parameter is configured as 2.

In some embodiments, in the case of M being equal to 1, the transmission state of S-TRP is indicated.

In some embodiments, in the case of M being greater than 1, the transmission state of the M-TRP is indicated. In the case that the first PUCCH is configured with the transmission mode based on FDM and M is greater than 1, different frequency domain resources of the first PUCCH correspond to different TCI states. In the case that the first PUCCH is configured with the transmission mode based on TDM and M is greater than 1, different time domain resources of the first PUCCH correspond to different TCI states. In the case that the first PUCCH is configured with the DMRS ports for at least two CDM groups and M is greater than 1, different DMRS ports for different CDM groups of the first PUCCH correspond to different TCI states. In the case that first PUCCH is configured with the transmission mode based on SFN and M is greater than 1, the DMRS ports for the first PUCCH correspond to M TCI states.

**In** some embodiments, the second indication information is carried in a third MAC CE, and the third MAC CE is the same as or different from an MAC CE where the first indication information is located. The MAC CE where the first indication information is located includes a first MAC CE or a second MAC CE.

**In** some embodiments, in the case that the third MAC CE is the same as the MAC CE carrying the first indication information, the third MAC CE simultaneously indicates the N TCI states (i.e., the contents of the first indication information), and the M TCI states corresponding to the first PUCCH (i.e., the contents of the second indication information). Further, the third MAC CE further indicates the correspondence between the identification information and the N TCI states (an optional content of the first indication information) and/or indicates the correspondence between the identification information and the M TCI states (an optional content of the second indication information). The identification information is a CORESET pool index or a CORESET group ID or an SS set group ID or a PDCCH group ID or a PUCCH group ID or a PUCCH resource index.

In some embodiments, the N TCI states has a corresponding relationship with at least one configuration parameter. In the case that the third MAC CE indicates an i^{th} configuration parameter in the at least one configuration parameter, it is determined that the M TCI states corresponding to the first PUCCH include a TCI state corresponding to the i^{th} configuration parameter; or, in the case that there are at least two configuration parameters and the third MAC CE indicates the at least two configuration parameters, it is determined that the M TCI states corresponding to the first PUCCH include TCI states corresponding to the at least two configuration parameters; in which i is a positive integer not greater than N, and the at least one configuration parameter is at least one of: at least one spatial relationship, at least one TCI state, at least one power control parameter set, at least one SRS resource set or at least one pathloss reference signal.

In some embodiments, the second indication information is carried in second DCI, and the second DCI is the same as or different from DCI where the first indication information is located.

For example, the first indication information is carried in DCI in format 1_1 or 1_2 without downlink assignment, and the second DCI is the DCI in format 1_1 or 1_2 without downlink assignment; or, the first indication information is carried in DCI in format 1_1 or 1_2 with downlink assignment, and the second DCI is DCI in format 1_1 or 1_2 without downlink assignment; or, the first indication information is carried in DCI in format 1_1 or 1_2 without downlink assignment, and the second DCI is DCI in format 1_1 or 1_2 with downlink assignment; or, the first indication information is carried in DCI in format 1_1 or 1_2 with downlink assignment, and the second DCI is the DCI in format 1_1 or 1_2 with downlink assignment; or, the first indication information is carried in DCI in format 1_1 or 1_2 with or without downstream assignment, and the second DCI is DCI in a format other than format 1_1 and format 1_2.

For example, in the case that the DCI where the second indication information is located is the DCI without downlink assignment, a field used by the second indication information in the DCI in format 1_1 or 1_2 without downlink assignment is at least one of:
- a FDRA;
- a TDRA;
- a VRB-to-PRB mapping;
- a PRB bundling size indicator;
- a rate matching indicator;
- a non-zero power CSI-RS triggering;
- a HARQ process number;
- a downlink assignment index;
- a TPC command for scheduled PUCCH;
- a second TPC command for scheduled PUCCH;
- a PUCCH resource indicator;
- a PDSCH-to-HARQ feedback timing indicator;
- a one-shot HARQ-ACK request;
- an enhanced Type 3 codebook indicator;
- a PDSCH group index;
- a new feedback indicator;
- a number of requested PDSCH groups;
- an HARQ-ACK retransmission indicator;
- an antenna port;
- an SRS request;
- an SRS offset indicator;
- CBG transmission information;
- CBGFI;
- DMRS sequence initialization;
- a priority indicator;
- a channel access-CP;
- a minimum applicable scheduling offset indicator;
- a SCell dormancy indication;
- a PDCCH monitoring adaptation indication;
- a PUCCH cell indicator;
- a redundancy version;
- a TCI state indication field;
- an enhanced TCI state indication field; or
- a newly added TCI state indication field: a second TCI state indication field.

In another embodiment, in the case that the DCI where the second indication information is located is the DCI with downlink assignment, a field used by the second indication information in the DCI in format 1_1 or 1_2 with downlink assignment is at least one of:
- a FDRA;
- a TDRA;
- a VRB-to-PRB mapping;
- a PRB bundling size indicator;
- a rate matching indicator;
- a non-zero power CSI-RS triggering;
- a HARQ process number;
- a downlink assignment index;
- a TPC command for scheduled PUCCH;
- a second TPC command for scheduled PUCCH;
- a PUCCH resource indicator;
- a PDSCH-to-HARQ feedback timing indicator;
- a one-shot HARQ-ACK request;
- an enhanced Type 3 codebook indicator;
- a PDSCH group index;
- a new feedback indicator;
- a number of requested PDSCH groups;
- an HARQ-ACK retransmission indicator;
- an antenna port;
- an SRS request;
- an SRS offset indicator;
- CBG transmission information;
- CBGFI;
- DMRS sequence initialization;
- a priority indicator;
- a channel access-CP;
- a minimum applicable scheduling offset indicator;
- a SCell dormancy indication;
- a PDCCH monitoring adaptation indication;
- a PUCCH cell indicator;
- a redundancy version;
- a TCI state indication field;
- an enhanced TCI state indication field; or
- a newly added TCI state indication field: a second TCI state indication field.

In some embodiments, the second indication information is in the DCI in format 1_1 or 1_2 with downlink assignment, and at least a portion of bits or at least a portion of codepoints of an existing information field are used by the second indication information.

In some embodiments, the second indication information is in the DCI in format 1_1 or 1_2 with downlink assignment, and an existing information field simultaneously indicates a combination of both existing information and the second indication information.

In some embodiments, the second indication information is in the DCI in format 1_1 or 1_2 with downlink assignment, and both a newly added information field and an existing information field indicate the second indication information, or indicate the existing information and the second indication information.

In some embodiments, the second indication information is in the DCI in format 1_1 or 1_2 without downlink assignment, and at least a portion of bits of an existing information field are used by the second indication information.

For example, the existing information field includes at least one of:
- a FDRA;
- a TDRA;
- a VRB-to-PRB mapping;
- a PRB bundling size indicator;
- a rate matching indicator;
- a non-zero power CSI-RS triggering;
- a HARQ process number;
- a downlink assignment index;
- a TPC command for scheduled PUCCH;
- a second TPC command for scheduled PUCCH;
- a PUCCH resource indicator;
- a PDSCH-to-HARQ feedback timing indicator;
- a one-shot HARQ-ACK request;
- an enhanced Type 3 codebook indicator;
- a PDSCH group index;
- a new feedback indicator;
- a number of requested PDSCH groups;
- an HARQ-ACK retransmission indicator;
- an antenna port;
- an SRS request;
- an SRS offset indicator;
- CBG transmission information;
- CBGFI;
- DMRS sequence initialization;
- a priority indicator;
- a channel access-CP;
- a minimum applicable scheduling offset indicator;
- a SCell dormancy indication;
- a PDCCH monitoring adaptation indication;
- a PUCCH cell indicator;
- a redundancy version; or
- a TCI state indication field.

In another case, in the case that the second DCI is the DCI in the format other than the format 1_1 and the format 1_2, a type of an SS set associated with the second DCI is a UE specific SS set or a common SS set.

In some embodiments, other possible scenarios for where the first indication information and the second indication information are located include (a) the first indication information is carried in the MAC CE and the second indication information is carried in the DCI and (b) the first indication information is carried in the DCI and the second indication information is carried in the MAC CE.

It should be noted that updating of the first indication information is independent from updating of the second indication information. That is, possible scenarios for updating the information include (a) the first indication information remains unchanged and the second indication information changes , (b) the first indication information changes and the second indication information remains unchanged , and (c) both the first indication information and the second indication information change.

It should be noted that the second indication information may be sent for a plurality of times and the content indicated by the second indication information for each time is independent. For example, the second indication information indicates the transmission state of the M-TRP at the i^{th} time of sending, and indicates the transmission state of the S-TRP at the (i+1)^{th} time of sending, where i is a positive integer. This is not limited in the disclosure.

In some embodiments, the second indication information further indicates a third TCI state for at least one channel. The at least one channel includes at least one of: a PUSCH; a PDSCH; or a PDCCH. That is, the third TCI state is the same as the second TCI state; or, in the case that the second TCI state includes an uplink TCI state and the at least one channel is the PDCCH or the PDSCH, the third TCI state includes a downlink TCI state that corresponds to the uplink TCI state.

In some embodiments, the MAC CE or the DCI where the second indication information is located further indicates a third TCI state for at least one channel. The at least one channel includes at least one of: a PUSCH; a PDSCH; or a PDCCH.

Further, in the case that the at least one channel includes the PUSCH, the third TCI state is a subset of the first TCI state. That is, the third TCI state is the same as the first TCI state or the third TCI state is a proper subset of the first TCI state.

Further, in the case that the at least one channel includes the PDCCH or the PDSCH, the first TCI state includes N joint TCI states and/or downlink TCI states, and the third TCI state is a subset of the N joint TCI states and/or downlink TCI states. That is, either (a) the third TCI state is the same as the first TCI state or (b) the third TCI state is a proper subset of the first TCI state or (c) the third TCI state is a proper subset of the N joint TCI states and/or downlink TCI states.

In some embodiments, the second indication information includes at least one BWP ID and/or at least one CC ID.

Further, in the case that the CC ID is a CC ID in a CC list, the second TCI state is suitable for all BWPs on all CCs in the CC list; i.e., the BWP ID may be ignored. The CC list is a list configured by the base station.

In some embodiments, the at least one BWP ID and/or at least one CC ID corresponding to the second TCI state indicated by the second indication information is the same as BWP ID(s) and/or CC ID(s) corresponding to the N TCI states indicated by the first indication information.

The access network device sends the second indication information to the terminal, and the relevant introduction of the second indication information may be referred to the description at step 240 above, and will not be repeated herein.

In summary, in the case that the access network device sends to the terminal the first indication information for indicating a plurality of sets of TCI states, the access network device then sends to the terminal the second indication information for indicating the TCI states used by the PUCCH transmission, thus realizing dynamic switching of the PUCCH channel between the transmission state of the M-TRP and the transmission state of the S-TRP, and improving the flexibility of the PUCCH transmission based on the unified TCI state.

It should be noted that embodiments of the disclosure include a plurality of optional steps, and each step includes at least one embodiment. Each step may stand alone as one embodiment or each step may also be split into a plurality of embodiments or the plurality of steps may constitute a single embodiment. For example, the step 240 may stand alone as one embodiment or the step 240 may also be split into a plurality of embodiments among the plurality of possible embodiments. This is not limited in the disclosure.

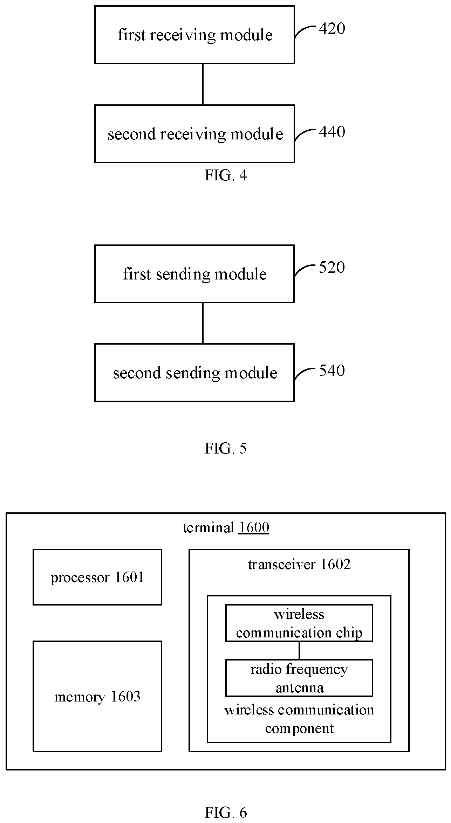

FIG. 4 is a block diagram illustrating an apparatus for indicating a TCI state according to an example embodiment of the disclosure. As shown in FIG. 4, the apparatus includes a first receiving module 420 and a second receiving module 440.

The first receiving module 420 is configured to receive first indication information, in which the first indication information indicates a first TCI state, the first TCI state includes N TCI states, the TCI states include a joint TCI state and/or an uplink TCI state, and N is an integer greater than 1.

The second receiving module 440 is configured to receive second indication information, in which the second indication information indicates a second TCI state used by first PUCCH transmission, and the second TCI state includes M TCI states.

The M TCI states are a subset of the N TCI states, and M is a positive integer not greater than N.

In a possible design, the first PUCCH is configured with at least one of: a transmission mode based on FDM; a transmission mode based on TDM; DMRS ports for at least two CDM groups; or a transmission mode based on SFN.

In a possible design, the transmission mode based on SFN includes: an SFN scheme A or an SFN scheme B.

In a possible design, the first PUCCH is configured with at least one of following configuration parameters: at least one spatial-relation-info; at least one TCI state; at least one power control parameter set; at least one SRS resource set; or at least one pathloss reference signal.

In a possible design, in response to the first PUCCH being configured with the transmission mode based on FDM and M being greater than 1, different frequency domain resources of the first PUCCH correspond to different TCI states. In response to the first PUCCH being configured with the transmission mode based on TDM and M being greater than 1, different time domain resources of the first PUCCH correspond to different TCI states. In response to the first PUCCH being configured with the DMRS ports for at least two CDM groups and M being greater than 1, different DMRS ports for different CDM groups of the first PUCCH correspond to different TCI states. In response to the first PUCCH being configured with the transmission mode based on SFN and M being greater than 1, the DMRS ports for the first PUCCH correspond to M TCI states.

In a possible design, the first indication information is carried in a first MAC CE, and the first MAC CE indicates the N TCI states; or, the first indication information is carried in a second MAC CE and first DCI, the second MAC CE indicates the N TCI states corresponding to each of at least two codepoints, and the first DCI indicates one of the at least two codepoints.

In a possible design, the first indication information includes identification information corresponding to each TCI state, and the identification information is a CORESET pool index or a CORESET group ID or an SS set group ID or a PDCCH group ID or a PUCCH group ID or a PUCCH resource index; or, the first indication information includes the N TCI states, and each TCI state in the N TCI states has a default mapping relationship with the identification information.

In a possible design, the second indication information is carried in a third MAC CE, and the third MAC CE is the same as or different from an MAC CE where the first indication information is located.

In a possible design, in response to the third MAC CE being the same as the MAC CE where the first indication information is located, the third MAC CE indicates the N TCI states, and the M TCI states corresponding to the first PUCCH.

In a possible design, the N TCI states has a corresponding relationship with at least one configuration parameter. In response to the third MAC CE indicating an i^{th} configuration parameter in the at least one configuration parameter, it is determined that the M TCI states corresponding to the first PUCCH include a TCI state corresponding to the i^{th} configuration parameter; or, in response to there being at least two configuration parameters and the third MAC CE indicating the at least two configuration parameters, it is determined that the M TCI states corresponding to the first PUCCH include TCI states corresponding to the at least two configuration parameters; in which i is a positive integer not greater than N, and the at least one configuration parameter is at least one of: at least one spatial relationship, at least one TCI state, at least one power control parameter set, at least one SRS resource set or at least one pathloss reference signal.

In a possible design, the second indication information is carried in second DCI, and the second DCI is the same as or different from DCI where the first indication information is located.

In a possible design, the first indication information is carried in DCI in format 1_1 or 1_2 without downlink assignment, and the second DCI is the DCI in format 1_1 or 1_2 without downlink assignment; or, the first indication information is carried in DCI in format 1_1 or 1_2 with downlink assignment, and the second DCI is DCI in format 1_1 or 1_2 without downlink assignment; or, the first indication information is carried in DCI in format 1_1 or 1_2 without downlink assignment, and the second DCI is DCI in format 1_1 or 1_2 with downlink assignment; or, the first indication information is carried in DCI in format 1_1 or 1_2 with downlink assignment, and the second DCI is the DCI in format 1_1 or 1_2 with downlink assignment; or, the first indication information is carried in DCI in format 1_1 or 1_2 with or without downstream assignment, and the second DCI is DCI in a format other than format 1_1 and format 1_2.

In a possible design, a field used by the second indication information in the DCI in format 1_1 or 1_2 without downlink assignment is at least one of: a FDRA; a TDRA; a VRB-to-PRB mapping; a PRB bundling size indicator; a rate matching indicator; a non-zero power CSI-RS triggering; a HARQ process number; a downlink assignment index; a TPC command for scheduled PUCCH; a second TPC command for scheduled PUCCH; a PUCCH resource indicator; a PDSCH-to-HARQ feedback timing indicator; a one-shot HARQ-ACK request; an enhanced Type 3 codebook indicator; a PDSCH group index; a new feedback indicator; a number of requested PDSCH groups; an HARQ-ACK retransmission indicator; an antenna port; an SRS request; an SRS offset indicator; CBG transmission information; CBGFI; DMRS sequence initialization; a priority indicator; a channel access-CP; a minimum applicable scheduling offset indicator; a SCell dormancy indication; a PDCCH monitoring adaptation indication; a PUCCH cell indicator; a redundancy version; a TCI state indication field; an enhanced TCI state indication field; or a second TCI state indication field.

In a possible design, a field used by the second indication information in the DCI in format 1_1 or 1_2 with downlink assignment is at least one of: a FDRA; a TDRA; a VRB-to-PRB mapping; a PRB bundling size indicator; a rate matching indicator; a non-zero power CSI-RS triggering; a HARQ process number; a downlink assignment index; a TPC command for scheduled PUCCH; a second TPC command for scheduled PUCCH; a PUCCH resource indicator; a PDSCH-to-HARQ feedback timing indicator; a one-shot HARQ-ACK request; an enhanced Type 3 codebook indicator; a PDSCH group index; a new feedback indicator; a number of requested PDSCH groups; an HARQ-ACK retransmission indicator; an antenna port; an SRS request; an SRS offset indicator; CBG transmission information; CBGFI; DMRS sequence initialization; a priority indicator; a channel access-CP; a minimum applicable scheduling offset indicator; a SCell dormancy indication; a PDCCH monitoring adaptation indication; a PUCCH cell indicator; a redundancy version; a TCI state indication field; an enhanced TCI state indication field; or a second TCI state indication field.

In a possible design, the second indication information is in the DCI in format 1_1 or 1_2 with downlink assignment, and at least a portion of bits or at least a portion of codepoints of an existing information field are used by the second indication information; or, the second indication information is in the DCI in format 1_1 or 1_2 with downlink assignment, and an existing information field simultaneously indicates a combination of both existing information and the second indication information; or, the second indication information is in the DCI in format 1_1 or 1_2 with downlink assignment, and both a newly added information field and an existing information field indicate the second indication information, or indicate the existing information and the second indication information; or, the second indication information is in the DCI in format 1_1 or 1_2 without downlink assignment, and at least a portion of bits of an existing information field are used by the second indication information.

In a possible design, the existing information field includes at least one of: a FDRA; a TDRA; a VRB-to-PRB mapping; a PRB bundling size indicator; a rate matching indicator; a non-zero power CSI-RS triggering; a HARQ process number; a downlink assignment index; a TPC command for scheduled PUCCH; a second TPC command for scheduled PUCCH; a PUCCH resource indicator; a PDSCH-to-HARQ feedback timing indicator; a one-shot HARQ-ACK request; an enhanced Type 3 codebook indicator; a PDSCH group index; a new feedback indicator; a number of requested PDSCH groups; an HARQ-ACK retransmission indicator; an antenna port; an SRS request; an SRS offset indicator; CBG transmission information; CBGFI; DMRS sequence initialization; a priority indicator; a channel access-CP; a minimum applicable scheduling offset indicator; a SCell dormancy indication; a PDCCH monitoring adaptation indication; a PUCCH cell indicator; a redundancy version; or a TCI state indication field.

In a possible design, in response to the second DCI being the DCI in the format other than the format 1_1 and the format 1_2, a type of an SS set associated with the second DCI is a UE specific SS set or a common SS set.

In a possible design, the second indication information further indicates a third TCI state for at least one channel. The at least one channel includes at least one of: a PUSCH; a PDSCH; or a PDCCH. That is, the third TCI state is the same as the second TCI state; or, in the case that the second TCI state includes an uplink TCI state and the at least one channel is a PDCCH or a PDSCH, the third TCI state includes a downlink TCI state that corresponds to the uplink TCI state.

In a possible design, the MAC CE or the DCI where the second indication information is located further indicates the third TCI state for at least one channel, in which the at least one channel includes at least one of: a PUSCH; a PDSCH; or a PDCCH.

In a possible design, in response to the at least one channel including the PUSCH, the third TCI state is a subset of the first TCI state; or, in response to the at least one channel including the PDCCH or the PDSCH, the first TCI state includes N joint TCI states and/or downlink TCI states, and the third TCI state is a subset of the N joint TCI states and/or downlink TCI states.

In a possible design, the second indication information includes at least one BWP ID and/or at least one CC ID.

In a possible design, in response to the CC ID being a CC ID in a CC list, the second TCI state is suitable for all BWPs on all CCs in the CC list.

In a possible design, the at least one BWP ID and/or at least one CC ID corresponding to the second TCI state indicated by the second indication information is the same as BWP ID(s) and/or CC ID(s) corresponding to the N TCI states indicated by the first indication information.

FIG. 5 is a block diagram illustrating an apparatus for indicating a TCI state according to an example embodiment of the disclosure. As shown in FIG. 5, the apparatus includes a first sending module 520 and a second sending module 540.

The first sending module 520 is configured to send first indication information, in which the first indication information indicates a first TCI state, the first TCI state includes N TCI states, the TCI states include a joint TCI state and/or an uplink TCI state, and N is an integer greater than 1.

The second sending module 540 is configured to send second indication information, in which the second indication information indicates a second TCI state used by first PUCCH transmission, and the second TCI state includes M TCI states.

The M TCI states are a subset of the N TCI states, and M is a positive integer not greater than N.

**In** a possible design, the first PUCCH is configured with at least one of: a transmission mode based on FDM; a transmission mode based on TDM; DMRS ports for at least two CDM groups; or a transmission mode based on SFN.

**In** a possible design, the transmission mode based on SFN includes: an SFN scheme A or an SFN scheme B.

In a possible design, the first PUCCH is configured with at least one of following configuration parameters: at least one spatial-relation-info; at least one TCI state; at least one power control parameter set; at least one SRS resource set; or at least one pathloss reference signal.

In a possible design, in response to the first PUCCH being configured with the transmission mode based on FDM and M being greater than 1, different frequency domain resources of the first PUCCH correspond to different TCI states. In response to the first PUCCH being configured with the transmission mode based on TDM and M being greater than 1, different time domain resources of the first PUCCH correspond to different TCI states. In response to the first PUCCH being configured with the DMRS ports for at least two CDM groups and M being greater than 1, different DMRS ports for different CDM groups of the first PUCCH correspond to different TCI states. In response to the first PUCCH being configured with the transmission mode based on SFN and M being greater than 1, the DMRS ports for the first PUCCH correspond to M TCI states.

In a possible design, the first indication information is carried in a first MAC CE, and the first MAC CE indicates the N TCI states; or, the first indication information is carried in a second MAC CE and first DCI, the second MAC CE indicates the N TCI states corresponding to each of at least two codepoints, and the first DCI indicates one of the at least two codepoints.

In a possible design, the first indication information includes identification information corresponding to each TCI state, and the identification information is a CORESET pool index or a CORESET group ID or an SS set group ID or a PDCCH group ID or a PUCCH group ID or a PUCCH resource index; or, the first indication information includes the N TCI states, and each TCI state in the N TCI states has a default mapping relationship with the identification information.

In a possible design, the second indication information is carried in a third MAC CE, and the third MAC CE is the same as or different from an MAC CE where the first indication information is located.

In a possible design, in response to the third MAC CE being the same as the MAC CE where the first indication information is located, the third MAC CE indicates the N TCI states, and the M TCI states corresponding to the first PUCCH.

In a possible design, the N TCI states has a corresponding relationship with at least one configuration parameter. In response to the third MAC CE indicating an i^{th} configuration parameter in the at least one configuration parameter, it is determined that the M TCI states corresponding to the first PUCCH include a TCI state corresponding to the i^{th} configuration parameter; or, in response to there being at least two configuration parameters and the third MAC CE indicating the at least two configuration parameters, it is determined that the M TCI states corresponding to the first PUCCH include TCI states corresponding to the at least two configuration parameters; in which i is a positive integer not greater than N, and the at least one configuration parameter is at least one of: at least one spatial relationship, at least one TCI state, at least one power control parameter set, at least one SRS resource set or at least one pathloss reference signal.

In a possible design, the second indication information is carried in second DCI, and the second DCI is the same as or different from DCI where the first indication information is located.

In a possible design, the first indication information is carried in DCI in format 1_1 or 1_2 without downlink assignment, and the second DCI is the DCI in format 1_1 or 1_2 without downlink assignment; or, the first indication information is carried in DCI in format 1_1 or 1_2 with downlink assignment, and the second DCI is DCI in format 1_1 or 1_2 without downlink assignment; or, the first indication information is carried in DCI in format 1_1 or 1_2 without downlink assignment, and the second DCI is DCI in format 1_1 or 1_2 with downlink assignment; or, the first indication information is carried in DCI in format 1_1 or 1_2 with downlink assignment, and the second DCI is the DCI in format 1_1 or 1_2 with downlink assignment; or, the first indication information is carried in DCI in format 1_1 or 1_2 with or without downstream assignment, and the second DCI is DCI in a format other than format 1_1 and format 1_2.

In a possible design, a field used by the second indication information in the DCI in format 1_1 or 1_2 without downlink assignment is at least one of: a FDRA; a TDRA; a VRB-to-PRB mapping; a PRB bundling size indicator; a rate matching indicator; a non-zero power CSI-RS triggering; a HARQ process number; a downlink assignment index; a TPC command for scheduled PUCCH; a second TPC command for scheduled PUCCH; a PUCCH resource indicator; a PDSCH-to-HARQ feedback timing indicator; a one-shot HARQ-ACK request; an enhanced Type 3 codebook indicator; a PDSCH group index; a new feedback indicator; a number of requested PDSCH groups; an HARQ-ACK retransmission indicator; an antenna port; an SRS request; an SRS offset indicator; CBG transmission information; CBGFI; DMRS sequence initialization; a priority indicator; a channel access-CP; a minimum applicable scheduling offset indicator; a SCell dormancy indication; a PDCCH monitoring adaptation indication; a PUCCH cell indicator; a redundancy version; a TCI state indication field; an enhanced TCI state indication field; or a second TCI state indication field.

In a possible design, a field used by the second indication information in the DCI in format 1_1 or 1_2 with downlink assignment is at least one of: a FDRA; a TDRA; a VRB-to-PRB mapping; a PRB bundling size indicator; a rate matching indicator; a non-zero power CSI-RS triggering; a HARQ process number; a downlink assignment index; a TPC command for scheduled PUCCH; a second TPC command for scheduled PUCCH; a PUCCH resource indicator; a PDSCH-to-HARQ feedback timing indicator; a one-shot HARQ-ACK request; an enhanced Type 3 codebook indicator; a PDSCH group index; a new feedback indicator; a number of requested PDSCH groups; an HARQ-ACK retransmission indicator; an antenna port; an SRS request; an SRS offset indicator; CBG transmission information; CBGFI; DMRS sequence initialization; a priority indicator; a channel access-CP; a minimum applicable scheduling offset indicator; a SCell dormancy indication; a PDCCH monitoring adaptation indication; a PUCCH cell indicator; a redundancy version; a TCI state indication field; an enhanced TCI state indication field; or a second TCI state indication field.

In a possible design, the second indication information is in the DCI in format 1_1 or 1_2 with downlink assignment, and at least a portion of bits or at least a portion of codepoints of an existing information field are used by the second indication information; or, the second indication information is in the DCI in format 1_1 or 1_2 with downlink assignment, and an existing information field simultaneously indicates a combination of both existing information and the second indication information; or, the second indication information is in the DCI in format 1_1 or 1_2 with downlink assignment, and both a newly added information field and an existing information field indicate the second indication information, or indicate the existing information and the second indication information; or, the second indication information is in the DCI in format 1_1 or 1_2 without downlink assignment, and at least a portion of bits of an existing information field are used by the second indication information.

In a possible design, the existing information field includes at least one of: a FDRA; a TDRA; a VRB-to-PRB mapping; a PRB bundling size indicator; a rate matching indicator; a non-zero power CSI-RS triggering; a HARQ process number; a downlink assignment index; a TPC command for scheduled PUCCH; a second TPC command for scheduled PUCCH; a PUCCH resource indicator; a PDSCH-to-HARQ feedback timing indicator; a one-shot HARQ-ACK request; an enhanced Type 3 codebook indicator; a PDSCH group index; a new feedback indicator; a number of requested PDSCH groups; an HARQ-ACK retransmission indicator; an antenna port; an SRS request; an SRS offset indicator; CBG transmission information; CBGFI; DMRS sequence initialization; a priority indicator; a channel access-CP; a minimum applicable scheduling offset indicator; a SCell dormancy indication; a PDCCH monitoring adaptation indication; a PUCCH cell indicator; a redundancy version; or a TCI state indication field.

In a possible design, in response to the second DCI being the DCI in the format other than the format 1_1 and the format 1_2, a type of an SS set associated with the second DCI is a UE specific SS set or a common SS set.

In a possible design, the second indication information further indicates a third TCI state for at least one channel. The at least one channel includes at least one of: a PUSCH; a PDSCH; or a PDCCH. That is, the third TCI state is the same as the second TCI state; or, in response to the second TCI state including an uplink TCI state and the at least one channel being a PDCCH or a PDSCH, the third TCI state includes a downlink TCI state that corresponds to the uplink TCI state.

In a possible design, the MAC CE or the DCI where the second indication information is located further indicates the third TCI state for at least one channel, in which the at least one channel includes at least one of: a PUSCH; a PDSCH; or a PDCCH.

In a possible design, in response to the at least one channel including the PUSCH, the third TCI state is a subset of the first TCI state; or, in response to the at least one channel including the PDCCH or the PDSCH, the first TCI state includes N joint TCI states and/or downlink TCI states, and the third TCI state is a subset of the N joint TCI states and/or downlink TCI states.

In a possible design, the second indication information includes at least one BWP ID and/or at least one CC ID.

In a possible design, in response to the CC ID being a CC ID in a CC list, the second TCI state is suitable for all BWPs on all CCs in the CC list.

In a possible design, the at least one BWP ID and/or at least one CC ID corresponding to the second TCI state indicated by the second indication information is the same as BWP ID(s) and/or CC ID(s) corresponding to the N TCI states indicated by the first indication information.

Referring to FIG. 6, it is a structural block diagram illustrating a terminal 1600 according to an embodiment of the disclosure. The terminal 1600 may include: a processor 1601, a transceiver 1602, and a memory 1603.

The processor 1601 includes one or more processing cores. The processor 1601 performs various functional applications and information processing by running software programs and modules.

The transceiver 1602 may include a receiver and a transmitter. For example, the receiver and the transmitter may be realized as the same wireless communication component, and the wireless communication component may include a wireless communication chip and a radio frequency antenna.

The memory 1603 may be coupled to the processor 1601 and the transceiver 1602.

The memory 1603 may be configured to store a computer program executed by the processor. The processor 1601 is configured to execute the computer program to implement the various steps performed by the terminal in the wireless communication system in the method embodiments described above.

Furthermore, the memory 1603 may be any type of volatile or non-volatile storage device or their combination. The volatile or non-volatile storage device includes, but is not limited to: a disk or an optical disk, an electrically erasable programmable read-only memory (EEPROM), an EPROM, a static random access memory (SRAM), a ROM, a magnetic memory, a flash memory, or a PROM.

The process performed by the transceiver 1602 may be referred to various steps performed by the terminal in the methods described above.

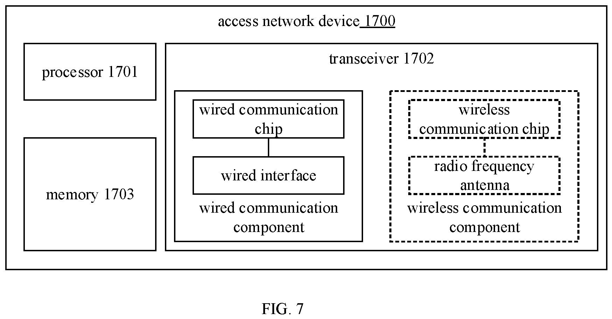

Referring to FIG. 7, it is a structural block diagram illustrating an access network device 1700 according to an embodiment of the disclosure. The access network device 1700 may include: a processor 1701, a transceiver 1702, and a memory 1703.

The processor 1701 includes one or more processing cores. The processor 1701 performs various functional applications and information processing by running software programs and modules.

The transceiver 1702 may include a receiver and a transmitter. For example, the transceiver 1702 may include a wired communication component, in which the wired communication component may include a wired communication chip and a wired interface (such as an optical fiber interface). Optionally, the transceiver 1702 may also include a wireless communication component, in which the wireless communication component may include a wireless communication chip and a radio frequency antenna.

The memory 1703 may be coupled to the processor 1701 and the transceiver 1702.

The memory 1703 may be configured to store a computer program executed by the processor. The processor 1701 is configured to execute the computer program to implement the various steps performed by the access network device in the wireless communication system in the method embodiments described above.

Further, the memory 1703 may be any type of volatile storage device or non-volatile storage device their combination. The volatile or non-volatile storage device includes, but is not limited to: a disk or an optical disk, an EEPROM, an EPROM, an SRAM, a ROM, a magnetic memory, a flash memory, or a PROM.

Embodiments of the disclosure further provide a computer-readable storage medium. The computer-readable storage medium stores at least one instruction, at least one segment of a program, a code set or an instruction set, in which the at least one instruction, the at least one segment of the program, the code set or the instruction set is loaded and executed by a processor to enable the communication device to implement the method for indicating a TCI state described above.

Embodiments of the disclosure further provide a computer program product. The computer program product includes computer instructions which are stored in the computer-readable storage medium. A processor of the computer device reads the computer instructions from the computer-readable storage medium, and the processor executes the computer instructions, causing the computer program product to perform the various steps of the methods described above, which are executed by the terminal or the access network device.

Embodiments of the disclosure further provide a chip. The chip is running in the computer device, so that the computer device is caused to perform the various steps of the methods described above, which are executed by the terminal or the access network device.

Embodiments of the disclosure further provide a computer program. The computer program is executed by the processor of the computer device, and the network device installed with the computer program implements the various steps of the methods described above, which are executed by the terminal or the access network device.

Those skilled in the art should realize that, in one or more of the above examples, the functions described in the disclosure may be implemented in hardware, software, firmware, or any combination of them. When implemented in software, the functions may be stored in a computer-readable medium or transmitted as one or more instructions/codes on the computer-readable medium. The computer-readable medium includes a computer storage medium and a communication medium, in which the communication medium includes any medium that facilitates the transmission of a computer program from one location to another. The storage medium may be any usable medium that may be accessed by general or specific computers.

Terms used in the embodiments of the disclosure are for the purpose of describing specific embodiments only, and are not intended to limit the embodiments of the disclosure. As used in the examples of the disclosure and the appended claims, the singular forms "a/an", "said" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" or "in response to" as used herein may be interpreted as "at" or "when" or "in response to a determination".

The above descriptions are merely embodiments of the application and are not intended to limit its scope of protection. Any modifications, equivalent replacements, or improvements made based on the technical solutions of the application should be included within its scope of protection.

## Claims

1. A method for indicating a transmission configuration indication (TCI) state, performed by a terminal, comprising:
receiving first indication information, wherein the first indication information indicates a first TCI state, the first TCI state comprises N TCI states, the TCI states comprise a joint TCI state and/or an uplink TCI state, and N is an integer greater than 1; and
receiving second indication information, wherein the second indication information indicates a second TCI state used by first physical uplink control channel (PUCCH) transmission, and the second TCI state comprises M TCI states;
wherein the M TCI states are a subset of the N TCI states, and M is a positive integer not greater than N.

2. The method according to claim 1, wherein the first PUCCH is configured with at least one of:
a transmission mode based on frequency division multiplexing (FDM);
a transmission mode based on time division multiplexing (TDM);
demodulation reference signal (DMRS) ports for at least two code division multiplexing (CDM) groups; or
a transmission mode based on single-frequency network (SFN).

3. The method according to claim 2, wherein the transmission mode based on SFN comprises:
an SFN scheme A; or,
an SFN scheme B.

4. The method according to claim 2, wherein the first PUCCH is configured with at least one of following configuration parameters:
at least one spatial-relation-information;
at least one TCI state;
at least one power control parameter set;
at least one sounding reference signal (SRS) resource set; or
at least one pathloss reference signal.

5. The method according to claim 2, wherein
in response to the first PUCCH being configured with the transmission mode based on FDM and M being greater than 1, different frequency domain resources of the first PUCCH correspond to different TCI states;
in response to the first PUCCH being configured with the transmission mode based on TDM and M being greater than 1, different time domain resources of the first PUCCH correspond to different TCI states;
in response to the first PUCCH being configured with the DMRS ports for at least two CDM groups and M being greater than 1, different DMRS ports for different CDM groups of the first PUCCH correspond to different TCI states; and
in response to the first PUCCH being configured with the transmission mode based on SFN and M being greater than 1, the DMRS ports for the first PUCCH correspond to M TCI states.

6. The method according to claim 1, wherein
the first indication information is carried in a first medium access control control element (MAC CE), and the first MAC CE indicates the N TCI states; or,
the first indication information is carried in a second MAC CE and first downlink control information (DCI), the second MAC CE indicates the N TCI states corresponding to each of at least two codepoints, and the first DCI indicates one of the at least two codepoints.

7. The method according to claim 6, wherein
the first indication information comprises identification information corresponding to each TCI state, and the identification information is a control resource set (CORESET) pool index or a CORESET group identity (ID) or a search space (SS) set group ID or a physical downlink control channel (PDCCH) group ID or a PUCCH group ID or a PUCCH resource index; or,
the first indication information comprises the N TCI states, and each TCI state in the N TCI states has a default mapping relationship with the identification information.

8. The method according to any one of claims 1 to 7, wherein the second indication information is carried in a third MAC CE, and the third MAC CE is the same as or different from an MAC CE where the first indication information is located.

9. The method according to claim 8, wherein, in response to the third MAC CE being the same as the MAC CE where the first indication information is located, the third MAC CE indicates the N TCI states, and the M TCI states corresponding to the first PUCCH.

10. The method according to claim 8, wherein N TCI states has a corresponding relationship with at least one configuration parameter;
in response to the third MAC CE indicating an i^{th} configuration parameter in the at least one configuration parameter, it is determined that the M TCI states corresponding to the first PUCCH comprise a TCI state corresponding to the i^{th} configuration parameter; or,
in response to there being at least two configuration parameters and the third MAC CE indicating the at least two configuration parameters, it is determined that the M TCI states corresponding to the first PUCCH comprise TCI states corresponding to the at least two configuration parameters;
wherein i is a positive integer not greater than N, and the at least one configuration parameter is at least one of: at least one spatial relationship, at least one TCI state, at least one power control parameter set, at least one SRS resource set or at least one pathloss reference signal.

11. The method according to any one of claims 1 to 7, wherein the second indication information is carried in second DCI, and the second DCI is the same as or different from DCI where the first indication information is located.

12. The method according to claim 11, wherein
the first indication information is carried in DCI in format 1_1 or 1_2 without downlink assignment, and the second DCI is the DCI in format 1_1 or 1_2 without downlink assignment; or,
the first indication information is carried in DCI in format 1_1 or 1_2 with downlink assignment, and the second DCI is DCI in format 1_1 or 1_2 without downlink assignment; or,
the first indication information is carried in DCI in format 1_1 or 1_2 without downlink assignment, and the second DCI is DCI in format 1_1 or 1_2 with downlink assignment; or,
the first indication information is carried in DCI in format 1_1 or 1_2 with downlink assignment, and the second DCI is the DCI in format 1_1 or 1_2 with downlink assignment; or,
the first indication information is carried in DCI in format 1_1 or 1_2 with or without downstream assignment, and the second DCI is DCI in a format other than format 1_1 and format 1_2.

13. The method according to claim 12, wherein a field used by the second indication information in the DCI in format 1_1 or 1_2 without downlink assignment is at least one of:
a frequency domain resource assignment (FDRA);
a time domain resource assignment (TDRA);
a virtual resource block to physical resource block mapping (VRB-to-PRB mapping);
a PRB bundling size indicator;
a rate matching indicator;
a non-zero power channel state information reference signal (CSI-RS) triggering;
a hybrid automatic repeat request (HARQ) process number;
a downlink assignment index;
a transmit power control (TPC) command for scheduled PUCCH;
a second TPC command for scheduled PUCCH;
a PUCCH resource indicator;
a physical downlink shared channel (PDSCH)-to-HARQ feedback timing indicator;
a one-shot HARQ-acknowledgment (ACK) request;
an enhanced Type 3 codebook indicator;
a PDSCH group index;
a new feedback indicator;
a number of requested PDSCH groups;
an HARQ-ACK retransmission indicator;
an antenna port;
an SRS request;
an SRS offset indicator;
code block group (CBG) transmission information;
CBG flushing out information (CBGFI);
demodulation reference signal (DMRS) sequence initialization;
a priority indicator;
a channel access- cyclic prefix (CP);
a minimum applicable scheduling offset indicator;
a secondary cell (SCell) dormancy indication;
a physical downlink control channel (PDCCH) monitoring adaptation indication;
a PUCCH cell indicator;
a redundancy version;
a TCI state indication field;
an enhanced TCI state indication field; or
a second TCI state indication field.

14. The method according to claim 12, wherein a field used by the second indication information in the DCI in format 1_1 or 1_2 with downlink assignment is at least one of:
a frequency domain resource assignment (FDRA);
a time domain resource assignment (TDRA);
a virtual resource block to physical resource block mapping (VRB-to-PRB mapping);
a PRB bundling size indicator;
a rate matching indicator;
a non-zero power channel state information reference signal (CSI-RS) triggering;
a hybrid automatic repeat request (HARQ) process number;
a downlink assignment index;
a transmit power control (TPC) command for scheduled physical uplink control channel (PUCCH);
a second TPC command for scheduled PUCCH;
a PUCCH resource indicator;
a physical downlink shared channel (PDSCH)-to-HARQ feedback timing indicator;
a one-shot HARQ-acknowledgment (ACK) request;
an enhanced Type 3 codebook indicator;
a PDSCH group index;
a new feedback indicator;
a number of requested PDSCH groups;
an HARQ-ACK retransmission indicator;
an antenna port;
an SRS request;
an SRS offset indicator;
code block group (CBG) transmission information;
CBG flushing out information (CBGFI);
demodulation reference signal (DMRS) sequence initialization;
a priority indicator;
a channel access- cyclic prefix (CP);
a minimum applicable scheduling offset indicator;
a secondary cell (SCell) dormancy indication;
a physical downlink control channel (PDCCH) monitoring adaptation indication;
a PUCCH cell indicator;
a redundancy version;
a TCI state indication field;
an enhanced TCI state indication field; or
a second TCI state indication field.

15. The method according to claim 12, wherein the second indication information is in the DCI in format 1_1 or 1_2 with downlink assignment, and at least a portion of bits or at least a portion of codepoints of an existing information field are used by the second indication information; or,
the second indication information is in the DCI in format 1_1 or 1_2 with downlink assignment, and an existing information field simultaneously indicates a combination of both existing information and the second indication information; or,
the second indication information is in the DCI in format 1_1 or 1_2 with downlink assignment, and both a newly added information field and an existing information field indicate the second indication information, or indicate the existing information and the second indication information; or,
the second indication information is in the DCI in format 1_1 or 1_2 without downlink assignment, and at least a portion of bits of an existing information field are used by the second indication information.

16. The method according to claim 15, wherein the existing information field comprises at least one of:
a frequency domain resource assignment (FDRA);
a time domain resource assignment (TDRA);
a virtual resource block to physical resource block mapping (VRB-to-PRB mapping);
a PRB bundling size indicator;
a rate matching indicator;
a non-zero power channel state information reference signal (CSI-RS) triggering;
a hybrid automatic repeat request (HARQ) process number;
downlink assignment index;
a transmit power control (TPC) command for scheduled physical uplink control channel (PUCCH);
a second TPC command for scheduled PUCCH;
a PUCCH resource indicator;
a physical downlink shared channel (PDSCH)-to-HARQ feedback timing indicator;
a one-shot HARQ-acknowledgment (ACK) request;
an enhanced Type 3 codebook indicator;
a PDSCH group index;
a new feedback indicator;
a number of requested PDSCH group;
a HARQ-ACK retransmission indicator;
an antenna port;
a sounding reference signal (SRS) request;
an SRS offset indicator;
code block group (CBG) transmission information;
CBG flushing out information (CBGFI);
demodulation reference signal (DMRS) sequence initialization;
a priority indicator;
a channel access- cyclic prefix (CP);
a minimum applicable scheduling offset indicator;
a secondary cell (SCell) dormancy indication;
a physical downlink control channel (PDCCH) monitoring adaptation indication;
a PUCCH cell indicator;
a redundancy version; or
a TCI state indication field.

17. The method according to claim 11, wherein, in response to the second DCI being the DCI in the format other than the format 1_1 and the format 1_2, a type of an SS set associated with the second DCI is a user equipment (UE) specific SS set or a common SS set.

18. The method according to any one of claims 1 to 17, further comprising:
indicating, by an MAC CE or DCI where the second indication information is located, a third TCI state for at least one channel, wherein the at least one channel comprises at least one of:
a PUSCH;
a PDSCH; or
a PDCCH.

19. The method according to claim 18, wherein,
in response to the at least one channel comprising the PUSCH, the third TCI state is a subset of the first TCI state; or,
in response to the at least one channel comprising the PDCCH or the PDSCH, the first TCI state comprises N joint TCI states and/or downlink TCI states, and the third TCI state is a subset of the N joint TCI states and/or downlink TCI states.

20. The method according to any one of claims 1 to 19, wherein the second indication information comprises at least one bandwidth part (BWP) ID and/or at least one component carrier (CC) ID.

21. The method according to claim 20, wherein in response to the CC ID being a CC ID in a CC list, the second TCI state is suitable for all BWPs on all CCs in the CC list.

22. The method according to any one of claims 1 to 19, wherein at least one BWP ID and/or at least one CC ID corresponding to the second TCI state indicated by the second indication information is the same as BWP ID(s) and/or CC ID(s) corresponding to the N TCI states indicated by the first indication information.

23. A method for indicating a transmission configuration indication (TCI) state, performed by an access network device, comprising:
sending first indication information, wherein the first indication information indicates a first TCI state, the first TCI state comprises N TCI states, the TCI states comprise a joint TCI state and/or an uplink TCI state, and N is an integer greater than 1; and
sending second indication information, wherein the second indication information indicates a second TCI state used by first physical uplink control channel (PUCCH) transmission, and the second TCI state comprises M TCI states;
wherein the M TCI states are a subset of the N TCI states, and M is a positive integer not greater than N.

24. The method according to claim 23, wherein the first PUCCH is configured with at least one of:
a transmission mode based on frequency division multiplexing (FDM);
a transmission mode based on time division multiplexing (TDM);
demodulation reference signal (DMRS) ports for at least two code division multiplexing (CDM) groups; or
a transmission mode based on single-frequency network (SFN).

25. The method according to claim 24, wherein the transmission mode based on SFN comprises:
an SFN scheme A; or,
an SFN scheme B.

26. The method according to claim 24, wherein the first PUCCH is configured with at least one of following configuration parameters:
at least one spatial-relation-information;
at least one TCI state;
at least one power control parameter set;
at least one sounding reference signal (SRS) resource set; or
at least one pathloss reference signal.

27. The method according to claim 24, wherein,
in response to the first PUCCH being configured with the transmission mode based on FDM and M being an integer greater than 1 and not greater than N, different frequency domain resources of the first PUCCH correspond to different TCI states;
in response to the first PUCCH being configured with the transmission mode based on TDM and M being an integer greater than 1 and not greater than N, different time domain resources of the first PUCCH correspond to different TCI states;
in response to the first PUCCH being configured with the DMRS ports for at least two CDM groups and M being an integer greater than 1 and not greater than N, different DMRS ports for different CDM groups of the first PUCCH correspond to different TCI states; and
in response to the first PUCCH being configured with the transmission mode based on SFN and M being an integer greater than 1 and not greater than N, the DMRS ports for the first PUCCH correspond to M TCI states.

28. The method according to claim 23, wherein
the first indication information is carried in a first medium access control control element (MAC CE), and the first MAC CE indicates the N TCI states; or,
the first indication information is carried in a second MAC CE and first downlink control information (DCI), the second MAC CE indicates the N TCI states corresponding to each of at least two codepoints, and the first DCI indicates one of the at least two codepoints.

29. The method according to claim 28, wherein the first indication information comprises identification information corresponding to each TCI state, and the identification information is a control resource set (CORESET) pool index or a CORESET group identity (ID) or a search space (SS) set group ID or a physical downlink control channel (PDCCH) group ID or a PUCCH group ID or a PUCCH resource index; or,
the first indication information comprises the N TCI states, and each TCI state in the N TCI states has a default mapping relationship with the identification information.

30. The method according to any one of claims 23 to 29, wherein the second indication information is carried in a third MAC CE, and the third MAC CE is the same as or different from an MAC CE where the first indication information is located.

31. The method according to claim 30, wherein, in response to the third MAC CE being the same as the MAC CE where the first indication information is located, the third MAC CE indicates the N TCI states, and the M TCI states corresponding to the first PUCCH.

32. The method according to claim 30, wherein N TCI states has a corresponding relationship with at least one configuration parameter;
in response to the third MAC CE indicating an i^{th} configuration parameter in the at least one configuration parameter, it is determined that the M TCI states corresponding to the first PUCCH comprise a TCI state corresponding to the i^{th} configuration parameter; or,
in response to there being at least two configuration parameters and the third MAC CE indicating the at least two configuration parameters, it is determined that the M TCI states corresponding to the first PUCCH comprise TCI states corresponding to the at least two configuration parameters;
wherein i is a positive integer not greater than N, and the at least one configuration parameter is at least one of: at least one spatial relationship, at least one TCI state, at least one power control parameter set, at least one SRS resource set or at least one pathloss reference signal.

33. The method according to any one of claims 23 to 29, wherein the second indication information is carried in second DCI, and the second DCI is the same as or different from DCI where the first indication information is located.

34. The method according to claim 33, wherein
the first indication information is carried in DCI in format 1_1 or 1_2 without downlink assignment, and the second DCI is the DCI in format 1_1 or 1_2 without downlink assignment; or,
the first indication information is carried in DCI in format 1_1 or 1_2 with downlink assignment, and the second DCI is DCI in format 1_1 or 1_2 without downlink assignment; or,
the first indication information is carried in DCI in format 1_1 or 1_2 without downlink assignment, and the second DCI is DCI in format 1_1 or 1_2 with downlink assignment; or,
the first indication information is carried in DCI in format 1_1 or 1_2 with downlink assignment, and the second DCI is the DCI in format 1_1 or 1_2 with downlink assignment; or,
the first indication information is carried in DCI in format 1_1 or 1_2 with or without downstream assignment, and the second DCI is DCI in a format other than format 1_1 and format 1_2.

35. The method according to claim 34, wherein a field used by the second indication information in the DCI in format 1_1 or 1_2 without downlink assignment is at least one of:
a frequency domain resource assignment (FDRA);
a time domain resource assignment (TDRA);
a virtual resource block to physical resource block mapping (VRB-to-PRB mapping);
a PRB bundling size indicator;
a rate matching indicator;
a non-zero power channel state information reference signal (CSI-RS) triggering;
a hybrid automatic repeat request (HARQ) process number;
a downlink assignment index;
a transmit power control (TPC) command for PUCCH;
a second TPC command for scheduled PUCCH;
a PUCCH resource indicator;
a physical downlink shared channel (PDSCH)-to-HARQ feedback timing indicator;
a one-shot HARQ-acknowledgment (ACK) request;
an enhanced Type 3 codebook indicator;
a PDSCH group index;
a new feedback indicator;
a number of requested PDSCH groups;
an HARQ-ACK retransmission indicator;
an antenna port;
an SRS request;
an SRS offset indicator;
code block group (CBG) transmission information;
CBG flushing out information (CBGFI);
demodulation reference signal (DMRS) sequence initialization;
a priority indicator;
a channel access- cyclic prefix (CP);
a minimum applicable scheduling offset indicator;
a secondary cell (SCell) dormancy indication;
a physical downlink control channel (PDCCH) monitoring adaptation indication;
a PUCCH cell indicator;
a redundancy version;
a TCI state indication field;
an enhanced TCI state indication field; or
a second TCI state indication field.

36. The method according to claim 34, wherein a field used by the second indication information in the DCI in format 1_1 or 1_2 with downlink assignment is at least one of:
a frequency domain resource assignment (FDRA);
a time domain resource assignment (TDRA);
a virtual resource block to physical resource block mapping (VRB-to-PRB mapping);
a PRB bundling size indicator;
a rate matching indicator;
a non-zero power channel state information reference signal (CSI-RS) triggering;
a hybrid automatic repeat request (HARQ) process number;
a downlink assignment index;
a transmit power control (TPC) command for scheduled physical uplink control channel (PUCCH);
a second TPC command for scheduled PUCCH;
a PUCCH resource indicator;
a physical downlink shared channel (PDSCH)-to-HARQ feedback timing indicator;
a one-shot HARQ-acknowledgment (ACK) request;
an enhanced Type 3 codebook indicator;
a PDSCH group index;
a new feedback indicator;
a number of requested PDSCH group;
an HARQ-ACK retransmission indicator;
an antenna port;
an SRS request;
an SRS offset indicator;
code block group (CBG) transmission information;
CBG flushing out information (CBGFI);
demodulation reference signal (DMRS) sequence initialization;
a priority indicator;
a channel access- cyclic prefix (CP);
a minimum applicable scheduling offset indicator;
a secondary cell (SCell) dormancy indication;
a physical downlink control channel (PDCCH) monitoring adaptation indication;
a PUCCH cell indicator;
a redundancy version;
a TCI state indication field;
an enhanced TCI state indication field; or
a second TCI state indication field.

37. The method according to claim 34, wherein the second indication information is in the DCI in format 1_1 or 1_2 with downlink assignment, and at least a portion of bits or at least a portion of codepoints of an existing information field are used by the second indication information; or,
the second indication information is in the DCI in format 1_1 or 1_2 with downlink assignment, and an existing information field simultaneously indicates a combination of both the existing information and the second indication information; or,
the second indication information is in the DCI in format 1_1 or 1_2 with downlink assignment, and both a newly added information field and an existing information field indicate the second indication information, or indicate the existing information and the second indication information; or,
the second indication information is in the DCI in format 1_1 or 1_2 without downlink assignment, and at least a portion of bits of an existing information field are used by the second indication information.

38. The method according to claim 37, wherein the existing information field comprises at least one of:
a frequency domain resource assignment (FDRA);
a time domain resource assignment (TDRA);
a virtual resource block to physical resource block mapping (VRB-to-PRB mapping);
a PRB bundling size indicator;
a rate matching indicator;
a non-zero power channel state information reference signal (CSI-RS) triggering;
a hybrid automatic repeat request (HARQ) process number;
a downlink assignment index;
a transmit power control (TPC) command for scheduled physical uplink control channel (PUCCH);
a second TPC command for scheduled PUCCH;
a PUCCH resource indicator;
a physical downlink shared channel (PDSCH)-to-HARQ feedback timing indicator;
a one-shot HARQ-acknowledgment (ACK) request;
an enhanced Type 3 codebook indicator;
a PDSCH group index;
a new feedback indicator;
a number of requested PDSCH group;
an HARQ-ACK retransmission indicator;
an antenna port;
an SRS request;
an SRS offset indicator;
code block group (CBG) transmission information;
CBG flushing out information (CBGFI);
demodulation reference signal (DMRS) sequence initialization;
a priority indicator;
a channel access- cyclic prefix (CP);
a minimum applicable scheduling offset indicator;
a secondary cell (SCell) dormancy indication;
a physical downlink control channel (PDCCH) monitoring adaptation indication;
a PUCCH cell indicator;
a redundancy version; or
a TCI state indication field.

39. The method according to claim 34, wherein, in response to the second DCI being the DCI in the format other than the format 1_1 and the format 1_2, a type of an SS set associated with the second DCI is a user equipment (UE) specific SS set or a common SS set.

40. The method according to any one of claims 23 to 39, further comprising:
indicating, by an MAC CE or the DCI where the second indication information is located, a third TCI state for at least one channel, wherein the at least one channel comprises at least one of:
a PUSCH;
a PDSCH; or
a PDCCH.

41. The method according to claim 40, wherein,
in response to the at least one channel comprising the PUSCH, the third TCI state is a subset of the first TCI state; or,
in response to the at least one channel comprising the PDCCH or the PDSCH, the first TCI state comprises N joint TCI states and/or downlink TCI states, and the third TCI state is a subset of the N joint TCI states and/or downlink TCI states.

42. The method according to any one of claims 23 to 41, wherein the second indication information comprises at least one bandwidth part (BWP) ID and/or at least one component carrier (CC) ID.

43. The method according to claim 42, wherein in response to the CC ID being a CC ID in a CC list, the second TCI state is suitable for all BWPs on all CCs in the CC list.

44. The method according to any one of claims 23 to 41, wherein at least one BWP ID and/or at least one CC ID corresponding to the second TCI state indicated by the second indication information is the same as BWP ID(s) and/or CC ID(s) corresponding to the N TCI states indicated by the first indication information.

45. An apparatus for indicating a transmission configuration indication (TCI) state, comprising:
a first receiving module, configured to receive first indication information, wherein the first indication information indicates a first TCI state, the first TCI state comprises N TCI states, the TCI states comprise a joint TCI state and/or an uplink TCI state, and N is an integer greater than 1; and
a second receiving module, configured to receive second indication information, wherein the second indication information indicates a second TCI state used by first physical uplink control channel (PUCCH) transmission, and the second TCI state comprises M TCI states;
wherein the M TCI states are a subset of the N TCI states, and M is a positive integer not greater than N.

46. An apparatus for indicating a transmission configuration indication (TCI) state, comprising:
a first sending module, configured to send first indication information, wherein the first indication information indicates a first TCI state, the first TCI state comprises N TCI states, the TCI states comprise a joint TCI state and/or an uplink TCI state, and N is an integer greater than 1; and
a second sending module, configured to send second indication information, wherein the second indication information indicates a second TCI state used by first physical uplink control channel (PUCCH) transmission, and the second TCI state comprises M TCI states;
wherein the M TCI states are a subset of the N TCI states, and M is a positive integer not greater than N.

47. A terminal comprising: a processor; and a transceiver coupled to the processor; wherein the processor is configured to load and execute executable instructions to implement the method according to any one of claims 1 to 22.

48. An access network device comprising: a processor; and a transceiver coupled to the processor; wherein the processor is configured to load and execute executable instructions to implement the method according to any one of claims 23 to 44.

49. A computer-readable storage medium, storing at least one instruction, at least one segment of a program, a code set or an instruction set, wherein the at least one instruction, the at least one segment of a program, the code set or the instruction set is loaded and executed by a processor to implement the method according to any one of claims 1 to 22, or the method according to any one of claims 23 to 44.
